# EUROPEAN PATENT APPLICATION

(11) **EP 4 290 657 A2**
(43) Date of publication of application: **13.12.2023**
(21) Application number: 22196047.9
(22) Date of filing: 16.09.2022
(51) Int. Cl.: H01M 50/209, H01M 50/233, H01M 50/244, H01M 50/264, H01M 50/291

(54) **BATTERY PACK, ASSEMBLY METHOD OF BATTERY PACK, AND DISASSEMBLY METHOD OF BATTERY PACK**

(30) Priority: 23.05.2022 CN 202210567058
(71) Applicant: CALB Co., Ltd., Changzhou City, Jiangsu Province (CN)
(72) Inventor: ZHAO, Dong, Changzhou City (CN)
(74) Representative: Becker, Eberhard

(57) **Abstract**

A battery pack, an assembly method thereof, and a disassembly method thereof are provided. The battery pack includes a battery box (10), a first battery assembly, a second battery assembly, and a separator (40). The separator (40) is located between the second battery assembly and the first battery assembly. An expansion gap is formed between a first surface (21) and a second surface (31), the expansion gap gradually expands from a second direction, and/or an expansion structure is formed between a third surface (41) and a fourth surface (42), the expansion structure gradually expands from a second direction. The second direction is perpendicular to the first direction, and the second direction extends from a bottom surface of the battery box (10) toward a top surface of the battery box (10).

## Description

### BACKGROUND

### Technical Field

The disclosure relates to the technical field of batteries, and in particular to a battery pack, an assembly method of the battery pack, and a disassembly method of the battery pack.

### Description of Related Art

In the related art, multiple battery modules may be disposed in a battery box. In order to improve the space utilization rate of the battery modules, batteries are generally clamped through tooling. The battery modules are interference fitted into the battery box. The interference fit may easily cause the batteries to be squeezed and deformed, resulting in damage to the battery structure.

### SUMMARY

The disclosure provides a battery pack, an assembly method of the battery pack, and a disassembly method of the battery pack.

According to a first aspect of the disclosure, a battery pack is provided. The battery pack includes a battery box, a first battery assembly, a second battery assembly, and a separator. The first battery assembly includes a plurality of first batteries stacked in a first direction. The second battery assembly includes a second battery. The first battery assembly and the second battery assembly are disposed in the battery box in the first direction. The first battery assembly has a first surface facing the second battery assembly, and the second battery assembly has a second surface facing the first battery assembly. The separator is located between the second battery assembly and the first battery assembly. The separator includes a third surface and a fourth surface. The third surface and the fourth surface respectively face the first surface and the second surface. An expansion gap is formed between the first surface and the second surface, and the expansion gap gradually expands from a second direction, and/or an expansion structure is formed between the third surface and the fourth surface, and the expansion structure gradually expands from the second direction. The second direction is perpendicular to the first direction, and the second direction extends from a bottom surface of the battery box toward a top surface of the battery box.

According to a second aspect of the disclosure, an assembly method of a battery pack is provided, and the assembly method includes the following steps. A first battery assembly and a second battery assembly are placed in a battery box in a first direction. The first battery assembly includes a plurality of first batteries stacked in the first direction, and the second battery assembly includes a plurality of second batteries stacked in the first direction. A separator is inserted between the first battery assembly and the second battery assembly from top to bottom to drive the first battery assembly and/or the second battery assembly to move.

According to a third aspect of the disclosure, a disassembly method of a battery pack is provided, and the disassembly method includes the following steps. Connection between a separator and a battery box is released. The separator is removed from the battery box. At least a part of a first battery assembly on one side of the separator is removed, and/or at least a part of a second battery assembly on another side of the separator is removed.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a schematic diagram of a battery pack according to an exemplary embodiment.
FIG. 2A is a partial enlarged schematic diagram of a battery pack from a perspective according to an exemplary embodiment.
FIG. 2B is a partial enlarged schematic diagram of a battery pack from another perspective according to an exemplary embodiment.
FIG. 3 is a schematic diagram of a battery pack according to an exemplary embodiment.
FIG. 4 is a schematic diagram of a separator of a battery pack according to an exemplary embodiment.
FIG. 5 is a schematic diagram of a partial structure of a battery pack according to an exemplary embodiment.
FIG. 6 is a partial schematic diagram of a first end plate and a second end plate of a battery pack according to an exemplary embodiment.
FIG. 7 is a schematic flowchart of an assembly method of a battery pack according to an exemplary embodiment.
FIG. 8 is a schematic flowchart of a disassembly method of a battery pack according to an exemplary embodiment.

### DETAILED DESCRIPTION OF DISCLOSED EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

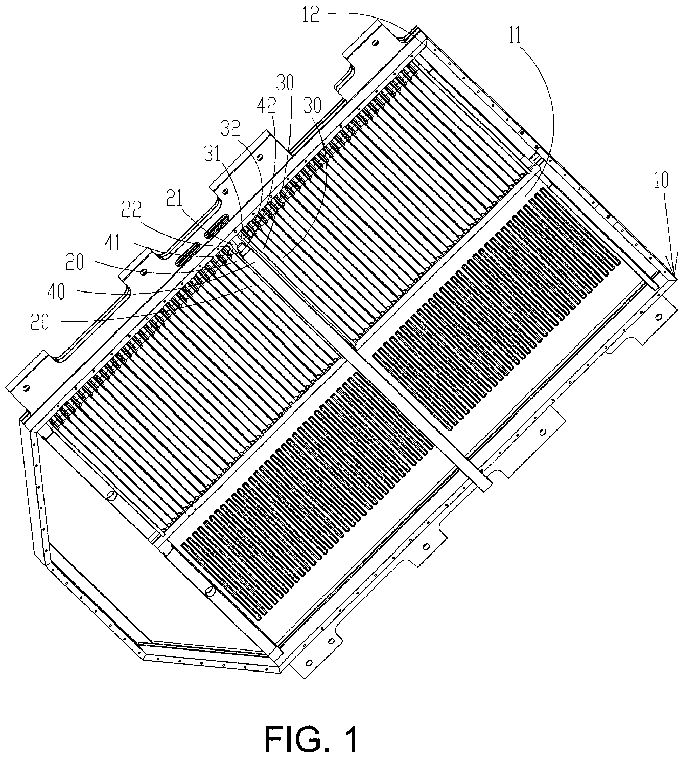

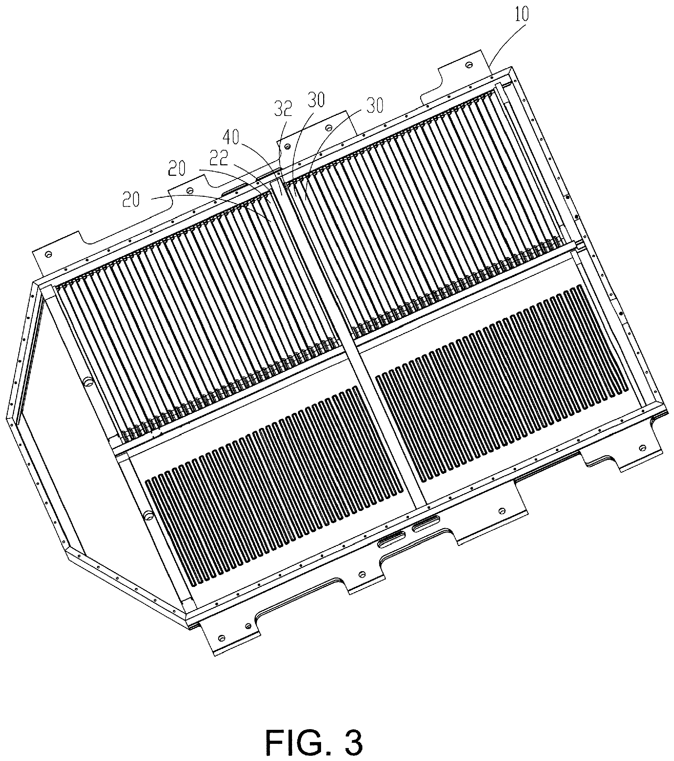

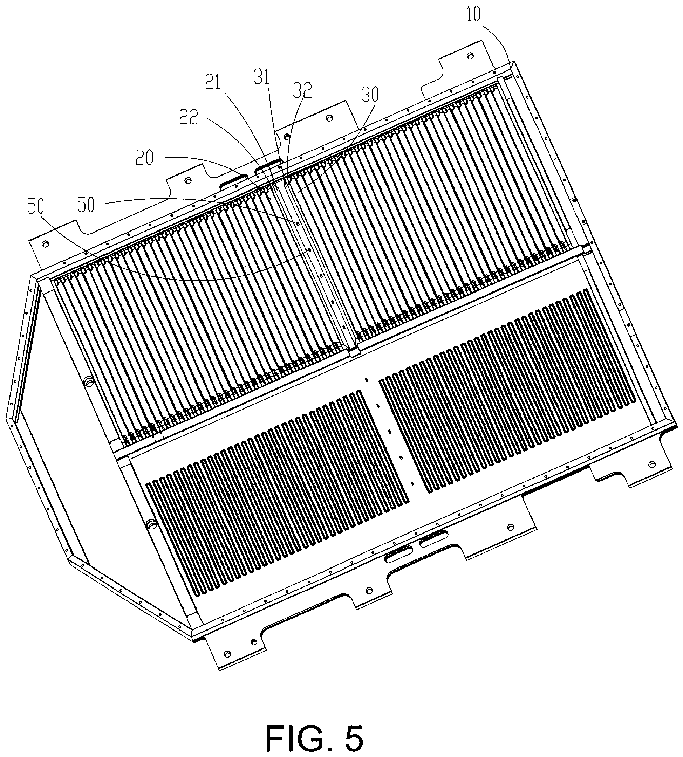

An embodiment of the disclosure provides a battery pack. Please refer to FIG. 1 to FIG. 6. The battery pack includes a battery box 10, a first battery assembly, a second battery assembly, and a separator 40. The first battery assembly includes a plurality of first batteries 20 stacked in a first direction. The second battery assembly includes a second battery 30. The first battery assembly and the second battery assembly are disposed in the battery box 10 in the first direction. The first battery assembly has a first surface 21 facing the second battery assembly, and the second battery assembly has a second surface 31 facing the first battery assembly. The separator 40 is located between the second battery assembly and the first battery assembly, and the separator 40 includes a third surface 41 and a fourth surface 42. The third surface 41 and the fourth surface 42 respectively face the first surface 21 and the second surface 31. An expansion gap is formed between the first surface 21 and the second surface 31, and the expansion gap gradually expands from a second direction, and/or an expansion structure is formed between the third surface 41 and the fourth surface 42, and the expansion structure gradually expands from the second direction. The second direction is perpendicular to the first direction, and the second direction extends from a bottom surface of the battery box 10 toward a top surface of the battery box 10.

The battery pack according to an embodiment of the disclosure includes the battery box 10, the first battery assembly, the second battery assembly, and the separator 40. The first battery assembly, the second battery assembly, and the separator 40 are disposed in the battery box 10, and the separator 40 is located between the second battery assembly and the first battery assembly. Through forming the expansion gap between the first surface 21 and the second surface 31 and/or forming the expansion structure between the third surface 41 and the fourth surface 42, such that the separator 40 may gradually compact the first battery assembly when the separator 40 is installed between the second battery assembly and the first battery assembly. As such, while realizing the clamping of the first battery assembly, the first batteries 20 are prevented from being crushed, thereby improving the usage performance of the battery pack.

It should be noted that the first battery assembly includes the first batteries 20 stacked in the first direction, that is, the first batteries 20 may be sequentially disposed in the first direction, thereby forming the first battery assembly. The second battery assembly may include multiple second batteries 30 stacked in the first direction, that is, the second batteries 30 may be sequentially disposed in the first direction, thereby forming the second battery assembly. The first battery assembly and the second battery assembly may be sequentially disposed in the first direction, and the separator 40 is located between the first battery assembly and the second battery assembly, so that the first battery assembly, the separator 40, and the second battery assembly may be sequentially disposed in the first direction. At this time, two sides of the separator 40 may respectively correspond to one first battery 20 and one second battery 30. In some embodiments, it is not excluded that the second battery assembly may include the second batteries 30 sequentially disposed in a direction perpendicular to the first direction, and at this time, the separator 40 may correspond to end portions of the second batteries 30.

The first battery assembly has the first surface 21 facing the second battery assembly, and the second battery assembly has the second surface 31 facing the first battery assembly, that is, the separator 40 may be located between the first surface 21 and the second surface 31. The separator 40 includes the third surface 41 and the fourth surface 42. The third surface 41 and the first surface 21 are disposed opposite to each other, and the fourth surface 42 and the second surface 31 are disposed opposite to each other, so that the separator 40 may be sandwiched between the first surface 21 and the second surface 31. Since the expansion gap is formed between the first surface 21 and the second surface 31 and/or the expansion structure is formed between the third surface 41 and the fourth surface 42, during the process of inserting the separator 40 between the first surface 21 and the second surface 31, the separator 40 may drive the first batteries 20 in the first battery assembly to implement compaction or the separator 40 may also drive the second batteries 30 in the second battery assembly to implement compaction. As such, it is not only convenient for installation, but also can improve the space utilization rate of the battery pack, and also, the first batteries 20 and the second batteries 30 cannot be easily crushed during the process.

The expansion gap gradually expands from the second direction, the expansion structure gradually expands from the second direction, the second direction is perpendicular to the first direction, and the second direction extends from the bottom surface of the battery box 10 to the top surface of the battery box 10. The first direction may be parallel to the bottom surface of the battery box 10 and the top surface of the battery box 10. At this time, the second direction may be perpendicular to the bottom surface of the battery box 10 and the top surface of the battery box 10, and the second direction is directed from the bottom surface of the battery box 10 to the top surface of the battery box 10. For example, the battery pack may be placed on a horizontal surface, the second direction may be a vertical direction and is a direction directed from bottom to top. The separator 40 being inserted between the first surface 21 and the second surface 31 may be considered as being inserted between the first surface 21 and the second surface 31 from top to bottom.

The first battery 20 and the second battery 30 may have same structures, or the first battery 20 and the second battery 30 may have different structures. The first battery 20 and the second battery 30 may both be rectangular batteries.

A battery includes a core and an electrolyte, and is the smallest unit capable of performing electrochemical reactions such as charging/discharging. The core refers to a unit formed by winding or laminating a stack portion. The stack portion includes a first electrode, a separator, and a second electrode. When the first electrode is a positive electrode, the second electrode is a negative electrode. The polarities of the first electrode and the second electrode may be interchanged.

The battery is a laminated battery, which is not only convenient for grouping, but can also be processed to obtain a battery with a longer length.

Specifically, the core is a laminated core. The core has a first pole piece, a second pole piece electrically opposite to the first pole piece, and a diaphragm piece disposed between the first pole piece and the second pole piece that are stacked on each other, so that multiple pairs of first pole pieces and second pole pieces are stacked to form the laminated core.

The battery may also be a roll core, that is, the first pole piece, the second pole piece electrically opposite to the first pole piece, and the diaphragm piece disposed between the first pole piece and the second pole piece are wound to obtain the roll core.

In an embodiment, each first battery 20 includes two opposite larger surfaces. The first direction is perpendicular to the larger surfaces, that is, the adjacent first batteries 20 are stacked through the larger surfaces, which not only facilitates the stacking of the first batteries 20, but also ensures the stability of the stacking of the first batteries 20. In addition, the adjacent first batteries 20 are stacked through the larger surfaces, and the contact between the larger surfaces enables the first batteries 20 to be evenly stressed during the squeezing process, so as to prevent the first batteries 20 from being structurally damaged due to stress on smaller surfaces of the first batteries 20.

Each second battery 30 includes two opposite larger surfaces. The first direction is perpendicular to the larger surface, that is, the adjacent second batteries 30 are stacked through the larger surfaces.

In some embodiments, the expansion gap is formed between the first surface 21 and the second surface 31, and an equidistant structure is formed between the third surface 41 and the fourth surface 42. For example, the separator 40 may be a rectangular structure. During the process of inserting the separator 40 between the first surface 21 and the second surface 31, the first battery assembly and the second battery assembly may be gradually clamped.

In some embodiments, an equidistant gap is formed between the first surface 21 and the second surface 31, and the expansion structure is formed between the third surface 41 and the fourth surface 42. For example, a rectangular gap is formed between the first surface 21 and the second surface 31. At this time, during the process of inserting the separator 40 between the first surface 21 and the second surface 31, the first battery assembly and the second battery assembly may be gradually clamped.

In some embodiments, the expansion gap is formed between the first surface 21 and the second surface 31, and the expansion structure is formed between the third surface 41 and the fourth surface 42. For example, the expansion gap may be a trapezoidal gap, and the expansion structure is a trapezoidal structure, so that during the process of inserting the separator 40 between the first surface 21 and the second surface 31, the first battery assembly and the second battery assembly may be gradually clamped.

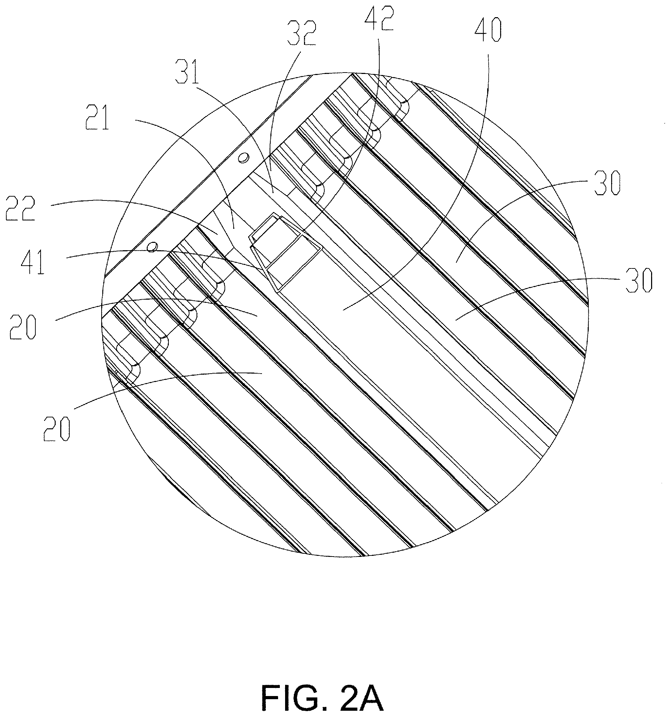

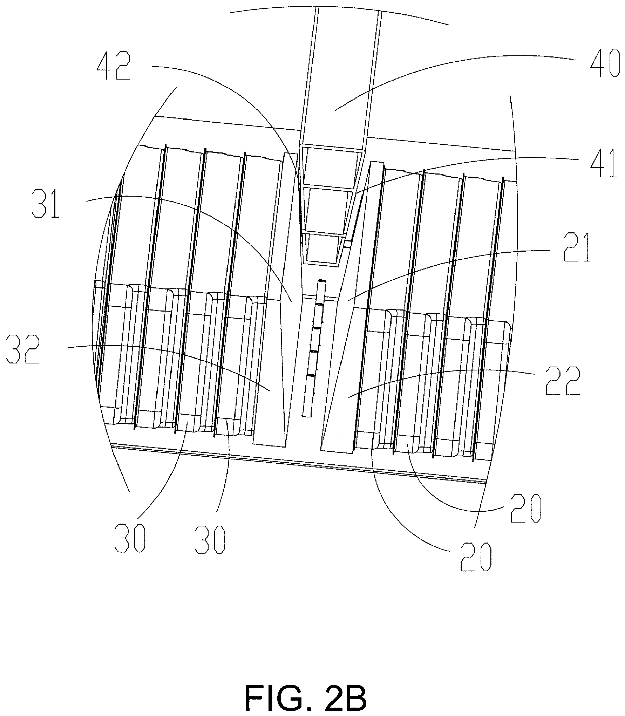

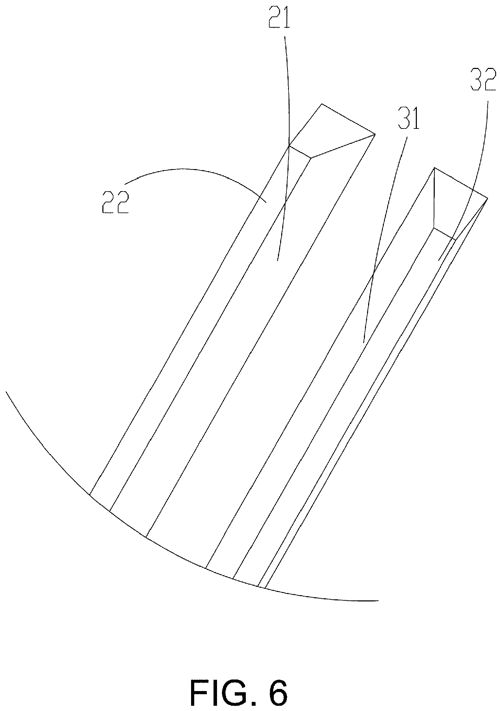

In an embodiment, as shown in FIG. 2A, FIG. 2B, and FIG. 6, the first surface 21 is a first inclined surface, and the first inclined surface is inclined relative to the second direction toward a side away from the second surface 31, and/or the second surface 31 is a second inclined surface, and the second inclined surface is inclined relative to the second direction toward a side away from the first surface 21, so that the expansion gap may be formed between the first surface 21 and the second surface 31, and during the process of inserting the separator 40 between the first surface 21 and the second surface 31, the first battery assembly and the second battery assembly may be gradually clamped.

The second direction may be considered as a vertical direction. At this time, the first inclined surface is inclined relative to the second direction toward the side away from the second surface 31, that is, the first surface 21 is inclined outward relative to the vertical direction. The second inclined surface is inclined relative to the second direction toward the side away from the first surface 21, that is, the second surface 31 is inclined outward relative to the vertical direction. The distance between the first surface 21 and the second surface 31 gradually increases from bottom to top, so that during the process of inserting the separator 40 between the first surface 21 and the second surface 31, the distance between the first surface 21 and the second surface 31 gradually increases, such that the first battery assembly and the second battery assembly may be gradually clamped.

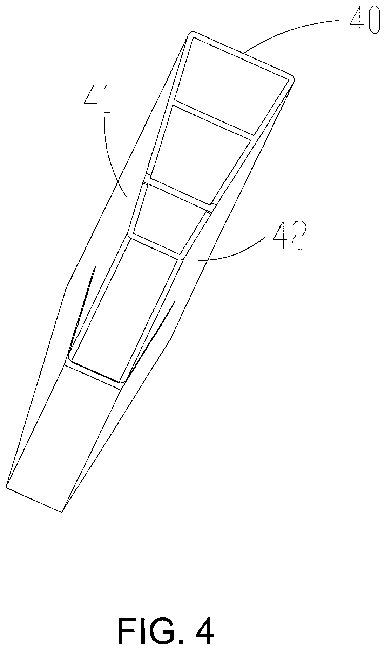

In an embodiment, as shown in FIG. 2A, FIG. 2B, and FIG. 4, the third surface 41 is a third inclined surface, and the third inclined surface is inclined relative to the second direction toward a side away from the fourth surface 42, and/or the fourth surface 42 is a fourth inclined surface, and the fourth inclined surface is inclined relative to the second direction toward a side away from the third surface 41, so that the expansion structure may be formed between the third surface 41 and the fourth surface 42, and during the process of inserting the separator 40 between the first surface 21 and the second surface 31, the first battery assembly and the second battery assembly may be gradually clamped.

The second direction may be regarded as a vertical direction. At this time, the third inclined surface is inclined relative to the second direction toward the side away from the fourth surface 42, that is, the third surface 41 is inclined outward relative to the vertical direction. The fourth inclined surface is inclined relative to the second direction toward the side away from the third surface 41, that is, the fourth surface 42 is inclined outward relative to the vertical direction. The distance between the third surface 41 and the fourth surface 42 gradually increases from bottom to top, so that during the process of inserting the separator 40 between the first surface 21 and the second surface 31, the distance between the first surface 21 and the second surface 31 gradually increases, such that the first battery assembly and the second battery assembly may be gradually clamped.

In an embodiment, an inclination angle of the first inclined surface relative to the second direction is equal to an inclination angle of the second inclined surface relative to the second direction, that is, the expansion gap formed between the first surface 21 and the second surface 31 is an isosceles trapezoid gap, so that the during the process of inserting the separator 40 between the first surface 21 and the second surface 31, the first battery assembly and the second battery assembly may be gradually clamped.

In an embodiment, an inclination angle of the third inclined surface relative to the second direction is equal to an inclination angle of the fourth inclined surface relative to the second direction, that is, the expansion structure formed between the third surface 41 and the fourth surface 42 may be an isosceles trapezoid structure, so that during the process of inserting the separator 40 between the first surface 21 and the second surface 31, the first battery assembly and the second battery assembly may be gradually clamped.

In an embodiment, an included angle between the first inclined surface and the first direction is 60° to 85°, that is, an included angle between the first inclined surface and the second direction may be 5° to 30°, so as to ensure that during the process of inserting the separator 40 between the first surface 21 and the second surface 31, the first battery assembly and the second battery assembly may be gradually clamped, and a first end plate 22 with the first inclined surface may also be prevented from occupying a larger lateral space. The included angle between the first inclined surface and the first direction is 60°, 61°, 62°, 65°, 68°, 70°, 72°, 75°, 78°, 80°, 81°, 82°, 83°, 84°, 85°, etc.

In an embodiment, an included angle between the second inclined surface and the first direction is 60° to 85°, that is, an included angle between the second inclined surface and the second direction may be 5° to 30°, so as to ensure that during the process of inserting the separator 40 between the first surface 21 and the second surface 31, the first battery assembly and the second battery assembly may be gradually clamped, and a second end plate 32 with the second inclined surface may also be prevented from occupying a larger lateral space. The included angle between the second inclined surface and the first direction is 60°, 61°, 62°, 65°, 68°, 70°, 72°, 75°, 78°, 80°, 81°, 82°, 83°, 84°, 85°, etc.

In an embodiment, an included angle between the third inclined surface and the first direction is 60° to 85°, that is, an included angle between the third inclined surface and the second direction may be 5° to 30°, so as to ensure that during the process of inserting the separator 40 between the first surface 21 and the second surface 31, the first battery assembly and the second battery assembly may be gradually clamped, and the separator 40 with the third inclined surface may also be prevented from occupying a larger lateral space. The included angle between the third inclined surface and the first direction is 60°, 61°, 62°, 65°, 68°, 70°, 72°, 75°, 78°, 80°, 81°, 82°, 83°, 84°, 85°, etc.

In an embodiment, an included angle between the fourth inclined surface and the first direction is 60° to 85°, that is, an included angle between the fourth inclined surface and the second direction may be 5° to 30°, so as to ensure that during the process of inserting the separator 40 between the first surface 21 and the second surface 31, the first battery assembly and the second battery assembly may be gradually clamped, and the separator 40 with the fourth inclined surface may also be prevented from occupying a larger lateral space. The included angle between the fourth inclined surface and the first direction is 60°, 61°, 62°, 65°, 68°, 70°, 72°, 75°, 78°, 80°, 81°, 82°, 83°, 84°, 85°, etc.

In an embodiment, at least a part of the expansion gap fits the expansion structure, which not only enables the separator 40 to clamp the first battery assembly and the second battery assembly, but also ensures the connection stability of the separator 40.

In an embodiment, as shown in FIG. 1 to FIG. 3, the separator 40 is a beam member, so that when the separator 40 is inserted between the second battery assembly and the first battery assembly from a third direction opposite to the second direction, the separator 40 can drive at least a part of the first battery assembly to move toward a direction away from the second battery assembly, so that the first battery assembly may be clamped, so as to ensure the installation stability of the first battery assembly. The second direction may be a vertical direction, and the second direction is a direction directed from bottom to top. The third direction is a vertical direction, and the third direction is a direction directed from top to bottom.

In an embodiment, as shown in FIG. 1 and FIG. 2A, the second battery assembly includes the second batteries 30 stacked in the first direction. When the separator 40 is inserted between the second battery assembly and the first battery assembly from the third direction, the separator 40 can drive at least a part of the second battery assembly to move toward a direction away from the first battery assembly, that is, during the process of inserting the separator 40 between the first surface 21 and the second surface 31 from top to bottom, the first battery assembly and the second battery assembly may move toward opposite directions, so that the first battery assembly is clamped and the second battery assembly is clamped.

In an embodiment, as shown in FIG. 1 to FIG. 3, the first battery assembly further includes the first end plate 22, the second battery assembly further includes the second end plate 32, and the first end plate 22 and the second end plate 32 respectively have the first surface 21 and the second surface 31. When the separator 40 is inserted between the first end plate 22 and the second end plate 32 from the third direction, the separator 40 can drive the first end plate 22 and the second end plate 32 to move, so that the first end plate 22 may compact the first batteries 20, and the second end plate 32 compacts the second batteries 30, so that the first battery assembly and the second battery assembly are clamped by the separator 40.

The first end plate 22 and the second end plate 32 may not only respectively compact the first batteries 20 and the first batteries 20, but also prevents the separator 40 from directly pressing the first batteries 20 and the second batteries 30, so that the first batteries 20 and the second batteries 30 are protected.

In an embodiment, the first end plate 22 includes a first insulating end plate, and the second end plate 32 includes a second insulating end plate, so as to ensure that reliable insulation can be formed between the first batteries 20 and the separator 40, and reliable insulation can be formed between the second batteries 30 and the separator 40.

The first end plate 22 may be an insulating plate or a part of the first end plate 22 may be an insulating plate, which is not limited herein. The first end plate 22 may be provided with an insulating layer. The insulating layer may be a coating, such as a coating prepared from a ceramic material such as aluminum oxide (Al₂O₃) and zirconium dioxide (ZrO₂).

The second end plate 32 may be an insulating plate or a part of the second end plate 32 may be an insulating plate, which is not limited herein. The second end plate 32 may be provided with an insulating layer. The insulating layer may be a coating, such as a coating prepared from a ceramic material such as aluminum oxide (Al₂O₃) and zirconium dioxide (ZrO₂).

In an embodiment, the first insulating end plate includes a first elastic structure, and the second insulating end plate includes a second elastic structure. The elastic modulus of the first elastic structure is 8000 MPa to 12000 MPa, and the elastic modulus of the second elastic structure is 8000 MPa to 12000 MPa, so that the first end plate 22 and the second end plate 32 may be buffered to prevent the first end plate 22 and the second end plate 32 from deforming the first batteries 20 and the second batteries 30 during the compression process, so as to protect the first batteries 20 and the second batteries 30.

The elastic modulus of the first elastic structure may be 8000 MPa, 8500 MPa, 9000 MPa, 9500 MPa, 10000 MPa, 11000 MPa, 12000 MPa, etc. The elastic modulus of the second elastic structure may be 8000 MPa, 8500 MPa, 9000 MPa, 9500 MPa, 10000 MPa, 11000 MPa, 12000 MPa, etc.

In an embodiment, the separator 40 is connected to the battery box 10, thereby ensuring that the separator 40 can be reliably fixed to the battery box 10, and ensuring that the separator 40 may clamp the first battery assembly and the second battery assembly.

In an embodiment, the separator 40 is detachably connected to the battery box 10, so that the separator 40 may be easily disassembled, so as to facilitate subsequent maintenance of the battery pack.

In an embodiment, as shown in FIG. 1, the battery box 10 includes a bottom plate 11; and a frame 12, disposed surrounding the bottom plate 11. The separator 40 is detachably connected to the bottom plate 11, so that the separator 40 can be disassembled, so as to facilitate subsequent maintenance of the battery pack.

It should be noted that the arrangement of the frame 12 surrounding the bottom plate 11 does not have any specific indication, and the key point is to explain that the frame 12 forms a circumferentially closed space. The frame 12 is connected to the bottom plate 11, and the frame 12 may be disposed on the bottom plate 11 or the frame 12 may be connected to a circumferential edge of the bottom plate 11, which is not limited herein. The separator 40 is disposed in the frame 12, thereby separating a large space enclosed by the frame 12, so as to respectively install the first battery assembly and the second battery assembly. The battery box 10 may further include a separating beam. The separating beam extends in the first direction, so that the separating beam intersects the separator 40, for example, there is one separating beam and one separator 40, so that four independent spaces may be formed in the frame 12, and each independent space may be provided with battery assembly therein. One separator 40 may compact four battery assemblies at the same time. The battery box 10 may further include a top cover. The top cover is connected to the frame 12, so that the top cover and the bottom plate 11 seal the frame 12. The bottom plate 11 may be integrated with a heat exchange channel, or the battery box 10 may further include a heat exchange structure.

In an embodiment, the separator 40 and the bottom plate 11 are connected through a fastener 50, which is not only convenient for connection, but also implements the detachable arrangement between the separator 40 and the bottom plate 11.

The fasteners 50 may be multiple. The fasteners 50 implement the connection between the separator 40 and the bottom plate 11. The fasteners 50 may be bolts or the fasteners 50 may be keys. The fasteners 50 may be connected to the separator 40 by the bottom plate 11, the fasteners 50 may be connected to the separator 40 by the top cover, or the fasteners 50 may be connected to the top cover, the separator 40, and the bottom plate 11 at the same time.

The separator 40 of the embodiment of the disclosure may be used as a middle crossbeam of the battery box 10. Inclined surfaces are disposed in directions away from the middle crossbeam respectively attached to the first end plate 22 and the second end plate 32. The middle crossbeam is separated from the battery box 10. Each battery is stacked from front and rear ends to the middle at the same time. A gap between the oppositely disposed first end plate 22 and second end plate 32 is less than a width at a bottom portion of the middle crossbeam. The middle crossbeam is installed from top to bottom, and the bottom portion of the middle crossbeam is installed and fixed to the bottom plate 11 or a cold plate through bolts. During the process of installing the middle crossbeam, due to the action of the inclined surfaces, the batteries move to two ends to pre-tighten the batteries. The first end plate 22 and the second end plate 32 at end portions are provided with inclined surfaces to prevent the first end plate 22 and the second end plate 32 at the end portions from being offset or structurally deformed due to the action of the pre-tightening force on the batteries.

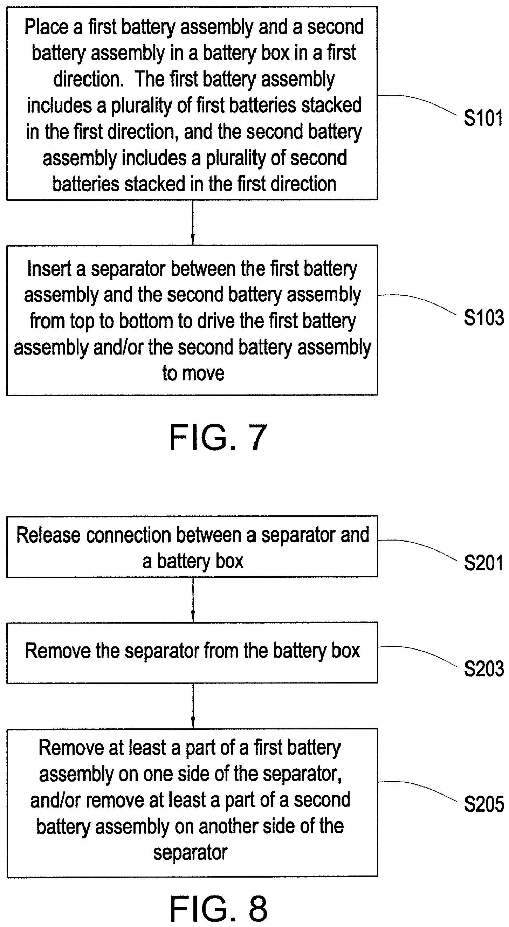

An embodiment of the disclosure also provides an assembly method of a battery pack. Please refer to FIG. 7. The assembly method of the battery pack includes the following steps.

In step S101, a first battery assembly and a second battery assembly are placed in a battery box 10 in a first direction. The first battery assembly includes multiple first batteries 20 stacked in the first direction, and the second battery assembly includes multiple second batteries 30 stacked in the first direction.

In step S103, a separator 40 is inserted between the first battery assembly and the second battery assembly from top to bottom to drive the first battery assembly and/or the second battery assembly to move.

In the assembly method of the battery pack according to an embodiment of the disclosure, through inserting the separator 40 between the first battery assembly and the second battery assembly from top to bottom, the first battery assembly and/or the second battery assembly may be driven to move, which may prevent the first batteries 20 and the second batteries 30 from being crushed while clamping the first battery assembly and the second battery assembly, thereby improving the assembly efficiency of the battery pack.

It should be noted that when the separator 40 is inserted between the first battery assembly and the second battery assembly from top to bottom, the first battery assembly and the second battery assembly may move in opposite directions, or the first battery assembly moves and the second battery assembly may not move, or the first battery assembly may not move and the second battery assembly moves.

In an embodiment, the assembly method of the battery pack further includes the following step. The separator 40 is connected to the battery box 10, thereby ensuring that the separator 40 may be stably connected to the battery box 10, and ensuring that the separator 40 clamps the first battery assembly and the second battery assembly.

The separator 40 may be connected to the battery box 10 through a fastener 50. Multiple fasteners 50 may implement the connection between the separator 40 and a bottom plate 11 of the battery box 10.

In an embodiment, placing the first battery assembly and the second battery assembly in the battery box 10 in the first direction includes the following. The first batteries 20 are placed in the battery box 10 in the first direction. The second batteries 30 are placed in the battery box 10 in a direction opposite to the first direction. After inserting the separator 40 between the first battery assembly and the second battery assembly from top to bottom, pre-tightening is formed between the first batteries 20 and pre-tightening is formed between the second batteries 30, so that during the process of inserting the separator 40 between the first battery assembly and the second battery assembly, the first battery assembly and the second battery assembly may be gradually clamped, thereby improving the quick assembly of the first battery assembly and the second battery assembly.

In some embodiments, the step of placing the first battery assembly and the second battery assembly in the battery box 10 in the first direction includes the following. The first batteries 20 are placed in the battery box 10 in a direction opposite to the first direction, and the second batteries 30 are placed in the battery box 10 in the direction opposite to the first direction.

In some embodiments, the step of placing the first battery assembly and the second battery assembly in the battery box 10 in the first direction includes the following. The first batteries 20 are placed in the battery box 10 in a direction opposite to the first direction, and the second batteries 30 are placed in the battery box 10 in the first direction.

In some embodiments, the step of placing the first battery assembly and the second battery assembly in the battery box 10 in the first direction includes the following. The first batteries 20 are placed in the battery box 10 in the first direction, and the second batteries 30 are placed in the battery box 10 in the first direction.

In an embodiment, the step of placing the first battery assembly and the second battery assembly in the battery box 10 in the first direction further includes the following. A first end plate 22 and a second end plate 32 are placed in the battery box 10, and the first end plate 22 and the second end plate 32 are oppositely disposed, wherein the separator 40 is inserted between the first end plate 22 and the second end plate 32 from top to bottom, such that the first end plate 22 may compact the first batteries 20, and the second end plate 32 compacts the second batteries 30, so as to realize that the first battery assembly and the second battery assembly are clamped by the separator 40. The first end plate 22 and the second end plate 32 may not only respectively compact the first batteries 20 and the first batteries 20, but also prevents the separator 40 from directly pressing the first batteries 20 and the second batteries 30, such that the first batteries 20 and the second batteries 30 are protected.

In an embodiment, before inserting the separator 40 between the first battery assembly and the second battery assembly from top to bottom, a minimum distance between the first battery assembly and the second battery assembly is a. In the first direction, a length of the first battery assembly is b, a length of the second battery assembly is c, a width of a bottom portion of the separator 40 is d, a compression amount of the first battery assembly is e, and a compression amount of the second battery assembly is f, where d>a, e = da/2b, f = da/2c are satisfied, and wherein e = 0.5% to 2%, f = 0.5% to 2%, which may not only ensure the reliable compaction of the first battery assembly and the second battery assembly, but also prevents the first batteries 20 and the second batteries 30 from being crushed. Also, the first batteries 20 and the second batteries 30 can have a reliable expansion space.

The minimum distance between the first battery assembly and the second battery assembly is less than the width of the bottom portion of the separator 40, so that when the separator 40 is inserted between the first battery assembly and the second battery assembly, the first battery assembly and the second battery assembly may move in opposite directions, so as to implement the compaction of the first battery assembly and the second battery assembly.

The compression amount e of the first battery assembly may be 0.5%, 0.6%, 0.7%, 0.9%, 1%, 1.5%, 1.6%, 1.7%, 1.9%, 2%, etc. The compression amount f of the second battery assembly may be 0.5%, 0.6%, 0.7%, 0.9%, 1%, 1.5%, 1.6%, 1.7%, 1.9%, 2%, etc.

In an embodiment, the assembly method of the battery pack is used to form the abovementioned battery pack. The assembly method of the battery pack may adopt related structures of the battery pack, which will not be repeated here.

An embodiment of the disclosure also provides a disassembly method of a battery pack. Please refer to FIG. 8, the disassembly method of the battery pack includes the following steps.

In step S201, connection between a separator 40 and a battery box 10 is released.

In step S203, the separator 40 is removed from the battery box 10.

In step S205, at least a part of a first battery assembly on one side of the separator 40 is removed, and/or at least pa art of a second battery assembly on other side of the separator 40 is removed.

In the disassembly method of the battery pack according to an embodiment of the disclosure, after the connection between the separator 40 and the battery box 10 is released, the separator 40 may be removed from the battery box 10 first, so that the first battery assembly and/or the second battery assembly may be removed, which facilitates subsequent maintenance of the first battery assembly and/or the second battery assembly.

In an embodiment, the step of releasing the connection between the separator 40 and the battery box 10 includes releasing connection of a fastener 50 to the separator 40.

In an embodiment, the step of removing the separator 40 from the battery box 10 includes removing the separator 40 from between a first end plate 22 and a second end plate 32, such that a spacing between the first end plate 22 and the second end plate 32 is reduced.

In an embodiment, the disassembly method of the battery pack is used to disassemble the abovementioned battery pack.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure. The specification and embodiments are illustrative.

## Claims

1. A battery pack, comprising:
a battery box (10);
a first battery assembly, including a plurality of first batteries (20) stacked in a first direction;
a second battery assembly, including a second battery (30), wherein the first battery assembly and the second battery assembly are disposed in the battery box (10) in the first direction, the first battery assembly has a first surface (21) facing the second battery assembly, and the second battery assembly has a second surface (31) facing the first battery assembly; and
a separator (40), located between the second battery assembly and the first battery assembly, wherein the separator (40) has a third surface (41) and a fourth surface (42), and the third surface (41) and the fourth surface (42) respectively face the first surface (21) and the second surface (31),
wherein an expansion gap is formed between the first surface (21) and the second surface (31), the expansion gap gradually expands from a second direction, and/or an expansion structure is formed between the third surface (41) and the fourth surface (42), and the expansion structure gradually expands from the second direction, the second direction is perpendicular to the first direction, and the second direction extends from a bottom surface of the battery box (10) to a top surface of the battery box (10).

2. The battery pack according to claim 1, wherein the first surface (21) is a first inclined surface, the first inclined surface is inclined relative to the second direction toward a side away from the second surface (31), and/or the second surface (31) is a second inclined surface, the second inclined surface is inclined relative to the second direction toward a side away from the first surface (21).

3. The battery pack according to claim 2, wherein the third surface (41) is a third inclined surface, the third inclined surface is inclined relative to the second direction toward a side away from the fourth surface (42), and/or the fourth surface (42) is a fourth inclined surface, the fourth inclined surface is inclined relative to the second direction toward a side away from the third surface (41).

4. The battery pack according to claim 3, wherein an inclination angle of the first inclined surface relative to the second direction is equal to an inclination angle of the second inclined surface relative to the second direction; and/or
an inclination angle of the third inclined surface relative to the second direction is equal to an inclination angle of the fourth inclined surface relative to the second direction.

5. The battery pack according to claim 3, wherein an included angle between the first inclined surface and the first direction is 60° to 85°; an included angle between the second inclined surface and the first direction is 60° to 85°; an included angle between the third inclined surface and the first direction is 60° to 85°; and/or an included angle between the fourth inclined surface and the first direction is 60° to 85°.

6. The battery pack according to claim 1, wherein at least a part of the expansion gap fits the expansion structure.

7. The battery pack according to any one of claims 1-6, wherein the separator (40) is a beam member, such that when the separator (40) is inserted between the second battery assembly and the first battery assembly from a third direction opposite to the second direction, the separator (40) is able to drive at least a part of the first battery assembly to move toward a direction away from the second battery assembly.

8. The battery pack according to claim 7, wherein the second battery assembly comprises a plurality of the second batteries (30) stacked in the first direction, when the separator (40) is inserted between the second battery assembly and the first battery assembly from the third direction, the separator (40) is able to drive at least a part of the second battery assembly to move toward a direction away from the first battery assembly.

9. The battery pack according to claim 8, wherein the first battery assembly further includes a first end plate (22), the second battery assembly further includes a second end plate (32), the first end plate (22) and the second end plate (32) respectively have the first surface (21) and the second surface (31), when the separator (40) is inserted between the first end plate (22) and the second end plate (32) from the third direction, the separator (40) is able to drive the first end plate (22) and the second end plate (32) to move.

10. The battery pack according to claim 9, wherein the first end plate (22) comprises a first insulating end plate, and the second end plate (32) comprises a second insulating end plate.

11. The battery pack according to claim 10, wherein the first insulating end plate comprises a first elastic structure, and the second insulating end plate comprises a second elastic structure,
wherein an elastic modulus of the first elastic structure is 8000 MPa to 12000 MPa, and an elastic modulus of the second elastic structure is 8000 MPa to 12000 MPa.

12. The battery pack according to claim 7, wherein the separator (40) is connected to the battery box (10),
wherein the separator (40) is detachably connected to the battery box (10).

13. The battery pack according to claim 12, wherein the battery box (10) comprises:
a bottom plate (11);
a frame (12), surrounding the bottom plate (11), wherein the separator (40) is detachably connected to the bottom plate (11).

14. The battery pack according to claim 13, wherein the separator (40) is connected to the bottom plate (11) through a fastener (50).

15. The battery pack according to any one of claims 1-6, wherein each of the first batteries (20) comprises two opposite larger surfaces, and the first direction is perpendicular to the larger surfaces.

16. An assembly method of a battery pack, the assembly method comprising the following steps:
placing a first battery assembly and a second battery assembly in a battery box (10) in a first direction, wherein the first battery assembly comprises a plurality of first batteries (20) stacked in the first direction, and the second battery assembly comprises a plurality of second batteries (30) stacked in the first direction; and
inserting a separator (40) between the first battery assembly and the second battery assembly from top to bottom to drive the first battery assembly and/or the second battery assembly to move.

17. The assembly method of the battery pack according to claim 16, the assembly method further comprising:
connecting the separator (40) to the battery box (10).

18. The assembly method of the battery pack according to claim 16, wherein the step of placing the first battery assembly and the second battery assembly in the battery box (10) in the first direction comprises:
placing the first batteries (20) in the battery box (10) in the first direction;
placing the second batteries (30) in the battery box (10) in a direction opposite to the first direction,
wherein after inserting the separator (40) between the first battery assembly and the second battery assembly from top to bottom, pre-tightening is formed between the first batteries (20), and pre-tightening is formed between the second batteries (30).

19. The assembly method of the battery pack according to claim 18, wherein the step of placing the first battery assembly and the second battery assembly in the battery box (10) in the first direction further comprises:
placing a first end plate (22) and a second end plate (32) in the battery box (10), wherein the first end plate (22) and the second end plate (32) are oppositely disposed,
wherein the separator is inserted between the first end plate (22) and the second end plate (32) from top to bottom.

20. The assembly method of the battery pack according to any one of claims 16-19, wherein before inserting the separator (40) between the first battery assembly and the second battery assembly from top to bottom, a minimum distance between the first battery assembly and the second battery assembly is a, in the first direction, a length of the first battery assembly is b, a length of the second battery assembly is c, a width of a bottom portion of the separator (40) is d, a compression amount of the first battery assembly is e, a compression amount of the second battery assembly is f, where d>a, e = (d-a)/2b, f = (d-a)/2c, wherein e = 0.5% to 2%, f = 0.5% to 2%.

21. A disassembly method of a battery pack, the disassembly method comprising:
releasing connection between a separator (40) and a battery box (10);
removing the separator (40) from the battery box (10); and
removing at least a part of a first battery assembly on one side of the separator (40), and/or removing at least a part of a second battery assembly on another side of the separator (40).
